# EUROPÄISCHE PATENTSCHRIFT

(11) **EP 0 868 237 B1**
(45) Veröffentlichungstag und Bekanntmachung des Hinweises auf die Patenterteilung: **12.04.2000**
(21) Anmeldenummer: 96942320.1
(22) Anmeldetag: 04.12.1996
(51) Int. Cl.: B21K 25/00, B23P 11/00, B21B 1/08

(54) **VERFAHREN ZUR HERSTELLUNG EINES METALLPROFILS**
METHOD FOR THE PRODUCTION OF A METAL SECTION
PROCEDE DE PRODUCTION D'UN PROFILE METALLIQUE

(30) Priorität: 14.12.1995 DE 19546660; 07.06.1996 DE 19622760
(43) Veröffentlichungstag der Anmeldung: 07.10.1998
(73) Patentinhaber: Attlington Investments Limited, Gibraltar (GI)
(72) Erfinder: Niemeier, Ralf, 33442 Herzebrock-Clarholz (DE)
(74) Vertreter: Patentanwälte Meinke, Dabringhaus und Partner
(86) Internationale Anmeldenummer: EP9605387
(87) Internationale Veröffentlichungsnummer: WO9721506

(56) Entgegenhaltungen:
- EP-A- 0 206 980
- EP-A- 0 260 224
- EP-A- 0 297 552
- DE-C- 448 116
- DE-C- 566 890
- US-A- 1 973 591
- US-A- 3 256 671
- PATENT ABSTRACTS OF JAPAN vol. 015, no. 354, 6.September 1991 & JP 03 138039 A (KAWASAKI STEEL CORP), 12.Juni 1991,

## Beschreibung

Die Erfindung betrifft ein Verfahren zur Herstellung eines Metallprofils, wie es beispielsweise in der Bauwirtschaft, im Fensterbau, im Fahrzeug- oder Maschinenbau oder ähnlichen Verwendungsgebieten benutzt wird (siehe z.B. EP-A-0 206 980).

Die bekannten Metallprofile werden regelmäßig durch Walzverfahren aus einem Metallstück hergestellt. Nachteil der bekannten Metallprofile ist, an allen Schenkeln des Profils die gleiche Materialstärke aufzuweisen, obwohl von den Belastungsanforderungen her oft nur eine hohe Stabilität in einer Achse, beispielsweise als Widerstand gegen Durchbiegung, erforderlich ist. Das in der weniger belasteten Achse vorhandene Material ist unnötig und führt zu Materialverschwendung und höheren Kosten. Hinzu kommt, daß bei herkömmlichen Walzprofilen die Schenkel beispielsweise in y-Achse nicht beliebig angeordnet werden können, da das spätere Profil noch walzbar sein muß, wodurch der Schenkel in y-Achse nicht in der Nähe des statischen Optimums, also etwa mittig eines Profils, angeordnet werden kann. Außerdem kann es beim Herstellungsverfahren zu einer Schwächung des Materials durch Knicken oder Biegen des Materials kommen. Außerdem scheitert die Herstellbarkeit von gewünschten Metallprofilen häufig daran, daß Metalle nur bis zu bestimmten Materialdicken noch walzbar sind. Auch können Metallprofile nicht dem indivduellen Einsatzbedarf entsprechend mit unterbrochenen Profilschenkeln oder mit längs, quer, diagonal, in Kurven oder auf sonstige beliebige Art angeordneten Profilschenkeln hergestellt werden. Auch stranggepreßte Profile, wie sie beispielhaft in einem in der Schrift DE 30 25 706 gezeigten Herstellungsverfahren dargestellt sind, werden in der Regel nur aus teurerem Werkstoff wie beispiesweise Aluminium hergestellt und sind aufgrund der aufwendigen Fertigungsverfahren zusätzlich teuer und müssen ggfls. noch kalibriert werden. Solche vorkalbrierten Metallprofile können die genannten Nachteile im Herstellungsprozeß nicht beseitigen. Auch die bekannten Gußverfahren für Metallprofile sind teuer. Ein Herstellverfahren für Profile aus Gußstücken ist beispielhaft in der Schrift DE 448 116 dargestellt. Bei diesem Verfahren lassen sich nur Profilschenkel verarbeiten, die aus noch glühendem Material auf den Walzstraßen in der Gießerei hergestellt werden. Das gezeigte Verfahren ist auf aufwendige Werkzeuge in der Gießerei angewiesen, und es eignet sich nicht für die nachträgliche Kaltverformung oder für Metallprofile mit feineren Geometrien. In Bereichen wie beispielsweise dem Fensterbau müssen kurz nacheinander den Anforderungen an die Belastbarkeit entsprechend eine Vielzahl unterschiedlicher Metallprofile verarbeitet werden. Um den Materialbedarf abdecken zu können, ist eine aufwendige Lagerhaltung und Logistik erforderlich. Der Verarbeiter ist abhängig von einem rechtzeitigen Nachschub der richtigen Profile. Außer der Festigkeit von Schenkeln eines Metallprofils in einer Achse können die Anforderungen an einzelne Profilschenkel aber auch auf andere Weise voneinander abweichen, wie beispielsweise durch Schall- und/oder Wärme-Isolierwerte, elektrische Leitfähigkeit, Dekorbeschichtung, Korrosionsschutz, definiertes Knick- oder Crashverhalten im Fahrzeugbau oder bestimmte vorteilhafte Geometrien in der Formgebung und konstruktiven Einbindung, die aber aufgrund der technischen Gegebenheiten der heute bekannten Metallprofile nur durch aufwendige Nachbearbeitung der fertigen Profile oder gar nicht realisiert werden können. Auch eine Kombination von Profilschenkeln aus unterschiedlichen Werkstoffen miteinander, und zwar nicht nur metallischer, wie Eisen, Kupfer, Aluminium, Legierungen etc., sondern auch anderer Werkstoffe wie beispielsweise Keramik, Glas, Kunststoffen, Holz, etc. ist heute nur mit aufwendig vorgeformten Teilen und/oder mit erheblichem Montageaufwand wie durch Schrauben, Schweißen, Verkleben etc. verbindbaren Profilschenkeln möglich.

Aus dem Stand der Technik ist ferner die Offenlegungsschrift DE 40 07 161 bekannt. Dort ist ein Verfahren zum Verbinden zweier plattenförmiger Metallelemente beschrieben. Als Nachteil eines verfahrensgemäß hergestellten Bauteils hat sich erwiesen, daß eine Kraftübertragung über die hergestellte Verbindung in einem solchen Bauteil nur in einer gemeinsamen Wirklinie der beiden Bauelemente möglich ist. Bei einer mehrdimensionalen Belastung der Verbindung würde sich diese lösen. Auch ist es sehr aufwendig, an den Bauelementen komplementäre Verbindungsabschnitte zu schaffen, da diese verfahrensgemäß wie bei einem Puzzlespiel zusammenpassen müssen. Die zu übertragenden Zug- und Druckbelastungen sollen über schwalbenschwanzförmige Ansätze in den komplementären Aussparungen in vergrößerte Flächenabschnitte übertragen werden. Eine solche Verbindung kann sich bei häufigen Wechselbelastungen lockern und schließlich ganz lösen.

Um die vorbeschriebenen Nachteile, die sich aus dem Stand der Technik ergeben, zu überwinden, ist es Aufgabe der vorliegenden Erfindung, ein kostengünstiges Verfahren zur Herstellung von Metallprofilen zu schaffen, das vorrangig hohe Durchsatzmengen, einen geringen Werkzeugverschleiß und eine zuverlässige Verbindung der Profilschenkel bei größtmöglicher Variabilität des Herstellungsverfahrens und der damit herstellbaren Profile ermöglicht.

Die erfindungsgemäße Aufgabe wird gelöst durch ein Herstellverfahren, bei dem zunächst in einen anderen Profilschenkel eine Rille mittels einer gefügeverändernden Materialumformung eingebracht wird, sodann ein Profilschenkel des Metallprofils mit seiner Stoßseite in die auf der Innenseite des anderen Profilschenkels befindliche Rille eingestellt wird und dann durch einen Druck, bei dem die Fließgrenze des darunter befindlichen Materials überschritten wird, unmittelbar oder mittelbar das benachbart zur Rille befindliche Material des anderen Profilschenkels dazu veranlaßt wird, sich so weit auf die Seitenflächen des einen Profilschenkels zuzubewegen, daß zumindest eine kraftschlüssige Verbindung an den Kontaktstellen erreicht wird. Bei einer Rille, die breit genug ausgeführt ist, können erfindungsgemäß auch mehr als ein Profilschenkel in einer Rille gefügeverändernd befestigt werden.

Das Einbringen der Rille und/oder das anschließende Andrücken des benachbart zur Rille befindliche Material des anderen Profilschenkels wird in weiterer Ausgestaltung der Erfindung mittels geeignet geformter Druckrollen, an denen die ineinanderstehenden Profilschenkel entlanglaufen und/oder über die die Druckrollen hinweglaufen, an die Seitenflächen des einen Profilschenkels angedrückt. Das Einbringen der Rille und/oder das Andrücken des benachbart zur Rille befindliche Material des anderen Profilschenkels kann jedoch auch durch die Hubbewegung eines geeigneten und entsprechend geformten Werkzeuges bewirkt werden. Die Profilschenkel können aus beliebigem Flachmaterial oder Halbzeugen bestehen. Die Kanaltiefe und/oder -breite der Rille kann an einer Stelle eines Querschnitts geringer sein als an einer anderen Stelle, so daß ein oder mehrere vorstehende Zähne entstehen, deren vordere Kanten sich bei der gefügeverändernden Befestigung in das Material des einen Profilschenkels hineindrücken oder sich bei einer entsprechenden Positiv-/Negativformung der miteinander zu befestigenden Teile miteinander verzahnen. Eine solche Rillenausformung kann beispielsweise durch mehrere entsprechend angewinkelte und ausgeformte Druckrollen oder durch Aufbiegen des anderen Profilschenkels vor dem gefügeverändernden Einbringen der Rille und anschließendem Zurückbiegen erreicht werden.

Außerdem kann die im anderen Profilschenkel befindliche Rille und das in die Rille eintauchende Material des einen Profilschenkels zur Hochachse des einen Profilschenkels angewinkelt oder die Hochmittelachse der Rille nicht rechtwinklig zur Horizontalfläche des anderen Profilschenkels sein, um eine größere Kontaktfläche zwischen den zu verbindenden Materialien zu erhalten oder um die Krafteinleitung in gewünschter Weise zu optimieren.

Zusätzlich zum Einbringen der Rille können geeignet geformte und angeordnete Werkzeuge zumindest eine der Seitenwände der Rille in an sich bekannter Weise reibungswiderstandserhöhend bearbeiten, wie beispielsweise durch Einkerbungen, Lochungen, Aufrauhungen, Körnungen, was durch Rollen oder auch Hubwerkzeuge bewerkstelligt werden kann. Auch ist beispielhaft in gleicher Weise eine zumindest einseitige und/oder zumindest teilweise aufweitende Aufstauchung der Unterseite des eintauchenden Profilschenkels, oder sonstige reibungswiderstandserhöhende Maßnahmen wie Einkerbungen in Längs- und/oder Querrichtungen, Lochungen, Körnungen, Stanzungen, Aufrauhungen und/oder das Einbringen von Erhebungen in den in die Rille einzustellenden Profilschenkel möglich. Eine reibungswiderstandserhöhende Bearbeitung kann aber auch durch andere an sich bekannte Mittel wie beispielsweise andere Werkzeuge als Rollen, etwa Meißel, Preßwerkzeuge etc. oder chemische Verfahren wie Ätzen vorgenommen werden. Die vorgeschlagene Behandlung der Rille und/oder der Seitenflächen kann unterschiedlich stark in unterschiedlichen Intervallen, intermittierend, alternierend oder auf sonstige Weise variabel erfolgen. Die reibungswiderstandserhöhende Bearbeitung kann in einer Weise vorgenommen werden, bei der nicht nur die Gleitkräfte der aufeinanderliegenden Flächen erhöht, sondern zusätzlich zum Kraftschluß ein Formschluß zwischen den aufeinanderliegenden Flächen erreicht wird. Anstelle oder zusätzlich zur reibungswiderstandserhöhenden Behandlung kann der einzustellende Profilschenkel im Bereich der Eintauchtiefe oder auch darüber gefügeverändert bzw. aufgestaucht sein, um eine formschlüssige Verbindung oder gewünschte definierte Kraftverhältnisse nach der gefügeverändernden Befestigung mit einem oder mehreren anderen Profilschenkeln zu schaffen.

Beim gefügeverändernden Eindrücken der Rille und beim anschließenden Andrücken der Seitenflächen werden die Profilschenkel durch Gegenhalter abgestützt. Bei Hubwerkzeugen kann die Abstützung durch einfache Platten als Gegenhalter erfolgen, bei Fördersystemen mit einem Vorschub über Rollen muß die Abstützung ebenfalls durch bewegliche Gegenhalter, vorzugsweise durch Rollen, erfolgen. Bei glatten Profilschenkeln sollten die Stützflächen der Gegenhalter ebenfalls glatt ausgestaltet sein, es sei denn, daß man über die Einbringung der Rille oder des Andrücken des benachbarten Materials hinaus eine zusätzliche Formung eines Profilschenkels zu erreichen sucht. Ein durch Druckrollen bearbeiteter Profilschenkel kann dann beispielsweise auf der anderen (Rück-) Seite durch negativ geformte Druckrollen abgestützt werden, was einen Formungsprozeß zusätzlich zur gefügeverändernden Umformung zu Zwecken der Befestigung des bearbeiteten Profilschenkels erlaubt. So können Erhebungen, Wölbungen, Sicken etc. in einen Profilschenkel eingearbeitet werden. Ein oder mehrere Profilschenkel des Metallprofils können vor, während oder nach der gefügeveränderden Befestigung steifigkeitserhöhende, isolierende, korrosionshemmende, gewichtsmindernde, sollbruchstellenschaffende oder dekorierende Bearbeitungen und/oder Beschichtungen erhalten. Ein oder mehrere Profilschenkel können auch ein- oder wechselseitig scherend eindrückend behandelt oder mit Sicken versehen sein, um beispielsweise die Torsionssteifigkeit zu verbessern. Eine isolierende Beschichtung eines oder mehrerer Profilschenkel kann mit geeigneten Materialien vorgenommen werden, um eine gewünschte mechanische, thermische, akustische oder elektrische Eigenschaft des Metallprofils zu erhalten. Zur Verhinderung von Korrosion können die Profilschenkel ganz oder teilweise verzinkt, lackiert oder in sonstiger Weise behandelt oder beschichtet sein oder werden. In weiterer Ausgestaltung der Erfindung werden die entsprechenden Bearbeitungen und/oder Beschichtungen vor bzw. während des Durchlaufs durch die gefügeverändernde Befestigung vorgenommen. Die entsprechenden Werkzeuge können in Wechselmagazinen untergebracht sein, die eine schnelle Umrüstung und damit eine hohe Flexibilität erlauben. Sollte jedoch eine Bearbeitung oder Beschichtung während des Duchlaufs durch die Anlage zum gefügeverändernden Befestigen - aus welchen Gründen auch immer - nicht möglich oder nicht wirtschaftlich sein, können diese Bearbeitungen auch nachher vorgenommen werden. Das erfindungsgemäße Herstellverfahren weist den Vorteil auf, daß beim gefügeverändernden Befestigen Beschichtungen nur relativ wenig verletzt werden. Als Dekorbeschichtung kommt beispielsweise eine Kunststoffbeschichtung, Lackierung, Verchromung oder Vergoldung in Betracht.

In weiterer Ausgestaltung der Erfindung drücken die Druckrollen das benachbart zur Rille befindliche Material des anderen Profilschenkels an den Seitenflächen des einen Profilschenkels hoch, um eine größere Kontakt- und Stützfläche zu schaffen. Weiter wird vorgeschlagen, einen oder mehrere Metallstreifen, die zu einem Profilschenkel eines Metallprofils weiterverarbeitet werden, mittels Druck- oder Schneidwerkzeugen von einem Blechcoil abzutrennen. Dabei können die Druck- oder Schneidwerkzeuge selbst oder durch zusätzliche Druck- oder Schneidwerkzeuge mittels einer geeigneten Gestaltung der Bearbeitungsfläche zusätzlich Einkerbungen und/oder reibungswiderstandserhöhende Bearbeitungen in die Oberflächen der abzutrennenden Profilschenkel schaffen. Um hohe Verarbeitungsgeschwindigkeiten zu ermöglichen, werden als Rollen ausgebildete Werkzeuge vorgeschlagen.

Anstelle oder zusätzlich zu Rollen-Werkzeugen, die ein rollendes Herstellverfahren erlauben, können auch stanzende, mit einer Hubbewegung arbeitende Werkzeuge für die erfindungsgemäßen Verfahrensschritte eingesetzt werden. Stanzende Werkzeuge sind dann vorteilhaft, wenn nicht über die volle Länge eines Profils Bearbeitungen erforderlich sind, oder mit kostengünstigeren Werkzeugen und/oder geringeren Bearbeitungsgeschwindigkeiten gearbeitet werden soll. Prinzipiell besteht hinsichtlich der Herstellung einer erfindungsgemäßen gefügeverändernden Befestigung zwischen rollend und stanzend hubweise arbeitenden Werkzeugen kein Unterschied. Um die Haltekräfte der gefügeveränderten Verbindung zu erhöhen, aber auch um die Akzeptanz der neuen Befestigungstechnik zu erhöhen oder zulassungsrechtliche Voraussetzungen zu erfüllen oder um sonstige technische Vorteile realisieren zu können, ist es möglich, die Verbindung zusätzlich durch an sich bekannte Verbindungstechniken wie beispielsweise Kleben, Nieten, Schweißen zu stärken.

Anstelle oder zusätzlich zum benachbart liegenden Material des anderen Profilschenkels kann weiteres drittes Material, beispielsweise in Drahtform, Blechstücken, Adapterstücken zur Ausfüllung zu breiter Rillen oder Isoliermaterial, mittels gefügeverändernden Befestigens in die Rille und an zumindest eine Seitenfläche des einen Profilschenkels an- oder eingebracht sein. Ein solches Vorgehen ist beispielsweise vorstellbar, wenn aufgrund zu geringer Rillentiefe nicht ausreichend Material für die gefügeverändernde Befestigung verfügbar ist, eine besonders große Böschung angelegt werden soll, oder wenn unterschiedliches, beispielsweise härteres Material eingebracht werden soll. Auch kann durch geeignet geformtes Drittmaterial, beispielsweise in Keilform, der Formschluß eine gefügeverändernden Befestigung positiv beeinflußt werden.

Durch die gefügeverändernde Befestigung wird das davon bearbeitete Material verfestigt. Das Material zumindest eines gefügeverändernd befestigten Profilschenkels kann aber auch noch nachträglich zusätzlich verfestigt oder gehärtet werden. Die gefügeverändernd befestigten Profilschenkel können vor oder nach dem Befestigungsvorgang ganz oder teilweise beschichtet werden. Die gefügeverändernd befestigten Profile können vorher oder nachher in beliebiger Weise gekantet und/oder in gewünschter Weise umgeformt werden. Die gefügeverändernde Befestigung der beiden oder mehrerer Profilschenkel miteinander kann durchgehend, aber auch unterbrochen nur an einem oder mehreren Abschnitten des Metallprofils, in Zacken, Kurven, seitlich versetzt, alternierend oder auf sonstige beliebige Weise vorgenommen sein. Die Rille kann durchgängig ausgeformt sein, es muß aber nicht durchgängig ein Profilschenkel in die Rille eingestellt oder das benachbart liegende Material angedrückt sein. Das Material kann in kurze Teilstücke gestückt sein oder je nach einzelnen Stücken als Werkstoff wechseln.

Mit dem vorgeschlagenen Verfahren können an einem Metallprofil außerdem weitere Teile aus Metall, Glas, Gummi, Kunststoff, Keramik oder anderen Werkstoffen als Profilschenkel oder sonstiges Teil auf zumindest einem der Profilschenkel gefügeverändernd zur Verzierung, Abdichtung oder für sonstige Zwecke befestigt werden und/oder zwei oder mehrere Profilschenkel miteinander verbinden, beispielsweise als Abstandhalter oder Isoliersteg. Dadurch ist es beispielsweise möglich, auf dem Metallprofil ohne zusätzliche Befestigungsmittel wie Schrauben, Nieten, etc. akustische, elektrische, thermische oder sonstige Isolierungen, Gehäuse, Verkleidungen, Instrumente oder Verbindungsmittel zu anderen Profilen, Abdeckungen oder sonstigen Formkörpern anzubringen.

Der eine Profilschenkel muß zumindest abschnittweise nicht nur in gerader Linie, sondern kann auch in seitlich versetzter Linie, wie beispielsweise in Wellenform, diagonal, quer und/oder unterbrochen auf dem anderen Profilschenkel anhand der Gefügeveränderung befestigt werden. Zusammen mit vorher oder nachher möglichen Umformungen und Abkantungen sind theoretisch alle denkbaren Profilformen und -querschnitte mit dem erfindungsgemäßen Verfahren realisierbar. Einzelne Profilschenkel können in gebogener Kontur vorgeschnitten, gestanzt, gelasert oder in sonstiger Art und Weise vorkonturiert sein, bevor sie mit einem anderen Profilschenkel gefügeverändernd befestigt werden, um einen Rundbogen oder ein Profil mit einer Rundung herzustellen. Die Profilschenkel können auch entlang der Längsachse einseitig gestanzt, gestreckt, gestaucht und/oder auf der anderen Seite gewalzt sein, um eine Biegung eines Profilschenkels zu erreichen. Auch können Bimetallschenkel eingesetzt werden, um ein gewünschtes thermisches Verhalten zu erzielen, oder die Profilschenkel werden mit einer unterschiedlichen Temperatur zusammengesetzt, um eine bestimmte Materialspannung bei dann gleicher Temperatur zu erhalten. Für bestimmte Anwendungsfälle wie beispielsweise Träger im Hoch- oder Fassadenbau müssen die Profile eine bestimmte Vorspannung aufweisen, um unter Last im Einbauzustand einer geradegestreckten Linie zu entsprechen. Solche Vorspannungen können auf die beschriebene Weise in das erfindungsgemäße Profil eingebracht werden. Mit den beschriebenen Bearbeitungen - auch Blechbearbeitungen in Verbundfolgewerkzeugen zur Erzielung einer gewünschten Form eines Profilschenkels, wie beispielsweise im Automobilbau - in beliebiger Folge können so alle vorstellbaren Profilformen gebildet werden.

Die Festigkeit der gefügeverändernden Befestigung läßt sich zusätzlich erhöhen, wenn der in die Rille eingestellte eine Profilschenkel kühler ist als der andere Profilschenkel, bevor beide Profilschenkel miteinander gefügeverändernd befestigt werden. Der andere Profilschenkel wird erhitzt, wenn in ihn eine Rille eingebracht wird. Stellt man in diese Rille einen kühleren einen Profilschenkel ein, befestigt beide gefügeverändernd miteinander, und kühlt der andere Profilschenkel danach ab, so zieht sich dessen Material dadurch zusammen, wodurch die Klemmwirkung der gefügeverändernden Befestigung positiv unterstützt wird. Dieser Effekt kann durch eine gezielte Heizung bzw. Abkühlung von ganzen Profilschenkeln oder Teilen davon verstärkt oder ersetzt werden. Wird die Rille als Hinterschnitt ausgeführt, so ergeben sich vorstehende Klemmnasen an den Seitenwänden der Rille, wodurch sich zur kraftschlüssigen Verbindung beim anschließenden gefügeverändernden Andrücken eine zusätzliche formschlüssige Verbindung erzielen läßt. Die formschlüssige Verbindung kann durch eine Formung des einzustellenden Profilschenkels zusätzlich oder allein unterstützt werden. Eine zusätzlich formschlüssige Verbindung bietet den Vorteil, daß sie auch dann noch Haltekräfte ausübt, wenn die Haltekräfte der kraftschlüssigen Verbindung aus Gründen der chemischen, thermischen, mechanischen oder sonstigen Einwirkung nachlassen sollten.

Als zusätzliches oder ersatzweises Mittel zur gefügeverändernden Befestigung können die im Bereich der Rille miteinander zu verbindenden Materialien anhand eines hochfrequent arbeitenden Schlagstoßverfahrens miteinander verbunden werden. Dabei wird das Material an der Verbindungsstelle auseinandergetrieben, verformt und evtl. durch die hochfrequente Bewegung quasi miteinander verschweißt. Als besonders vorteilhaft erweist sich hier eine sich mit zunehmender Tiefe erweiternde Rille, in der das Material auseinanderlaufen kann und dadurch besonders gegen späteres Herauslösen aus der Verbindung formschlüssig gesichert ist. Ziel des hochfrequenten Schlagstoßverfahrens ist eine möglichst hohe Verwirkung bzw. Durchsetzung der Materialien der miteinander zu befestigenden Profilschenkel. Eine frequentierende Behandlung eines Profilschenkels oder des gesamten Profils kann auch vorteilhaft eingesetzt werden, um Eigenspannungen abzubauen bzw. eine stabilisierte Eigenspannung zu erzeugen.

Durch das erfindungsgemäße Verfahren ist es möglich, schnell und kostengünstig bei geringen Werkzeugkosten große Mengen des neuen Metallprofils herzustellen, wobei die Profilschenkel nahezu beliebig zueineinander angeordnet werden können und auch Material von unterschiedlicher Dicke, sogar Stangen- oder Blockmaterial zu einem Metallprofil verarbeitet werden kann. Damit ist es möglich, das Metallprofil den vorliegenden Belastungen anzupassen, was zu Kostensenkung und Gewichtsersparnis führt. Bei dem vorgeschlagenen Herstellungsverfahren sind die eingesetzten Werkzeuge keinem hohen Verschleiß ausgesetzt. Die einzelnen Profilschenkel werden durch die Bearbeitungsmaschine durchlaufend zuverlässig und schub-, kopfzug-, druck- und zugfest zusammengefügt. Mit dem vorgeschlagenen Verfahren können exakte Längen für einen konkreten Bedarf genauso hergestellt werden wie handelsüblich abgelängte Stangenware. Die Bearbeitungsanlagen selbst sind so günstig, daß sie auch kleinere Betriebe anschaffen können und so die Möglichkeit erhalten, sich eine unbeschränkte Vielzahl von eigenen Wunschprofilen aus wenigen vorrätigen oder leicht selbst herstellbaren Blechbandbreiten und -dicken herzustellen. Bei dem erfindungsgemäßen Verfahren zur Herstellung eines Metallprofils werden die Knotenpunkte nicht durch Biege- und Reißkräfte geschwächt, sondern im Gegenteil durch die zu erzielende Kaltverfestigung bei der gefügeverändernden Befestigung gestärkt, so daß sich unter Belastung eher das übrige Profilschenkelmaterial verbiegt als daß sich die Verbindung löst. Zusätzlich ist bei sehr hohen statischen Anforderungen eine nachträgliche gezielte teilweise oder vollständige Steigerung der Werkstoffestigkeit der jeweiligen Verbindungszonen möglich, wie beispielsweise durch Kugelstrahlen, thermische Behandlung etc. Die Ecken können nahezu winkelig ohne Rundungen oder Materialabsätze ausgebildet werden, wodurch eine glatte Anbindungskontur bis dicht an die Stoßkanten der einzelnen Profilschenkel herstellbar ist. Die Zone, in der zwei Profilschenkel miteinander gefügeverändernd befestigt sind, erstreckt sich - auch wenn hohe Ausreißkräfte erzielt werden sollen - auf Zonen, die nur wenig breit sind, beispielsweise bei mehrere Millimeter starken Blechen auf 1 mm oder sogar weniger Breite, sodaß sich optisch und technisch keine Nachteile durch Erhebungen oder Anschrägungen an der Befestigungsstelle ergeben. Auch können die im erfindungsgemäßen Verfahren in der Bearbeitung befindlichen Profilschenkel wahlweise vor, während oder nach der Bearbeitung unterschiedlichen zusätzlichen Bearbeitungen und/oder Behandlungen unterzogen werden, je nachdem, zu welchem Zeitpunkt die Bearbeitung oder Behandlung am einfachsten vorgenommen werden kann. Das Herstellverfahren kann auch dazu genutzt werden, vorhandene Profilprogramme, Träger, Rohre, Winkel etc. durch die gefügeverändernde Befestigung zusätzlicher Profilschenkel oder Werkstücke um zusätzliche Varianten zu erweitern. Bei unterschiedlichen Werkstoffen eines fertigen Metallprofils ergeben sich Vorteile für das spätere Recycling, da sich die einzelnen Profilschenkel später relativ leicht wieder voneinander trennen lassen. Dies kann interssant sein, wenn giftige Werkstoffe wie Blei verwendet werden oder einzelne Schenkel in besonderer Weise kontaminiert sind durch radioaktive Strahlung, Chemikalien etc. oder einzelne Profilschenkel aus besonders wertvollen Werkstoffen wie beispielsweise Platin in Katalysatoren bestehen.

Nachfolgend ist das erfindungsgemäße Verfahren zur Herstellung eines Metallprofils anhand eines in den Zeichnungen erläuterten Ausführungsbeispiels im einzelnen erläutert. Es zeigen:
- Fig. 1: einen Walzvorgang zum gefügeverändernden Einbringen einer Rille in das Material des Profilschenkels mittels einer Rolle im Querschnitt,
- Fig. 2: einen Walzvorgang zum Andrücken des benachbart zur Rille befindlichen Materials des Profilschenkels in x-Achse an die seitlichen Oberflächen des Profilschenkels in y-Achse im Querschnitt,
- Fig. 2a: einen Walzvorgang zum gefügeverändernden Einwalzen einer Rille in einen Profilschenkel in x-Achse mit Rollen, deren Außenkontur von den in Fig. 1 gezeigten Rollen abweicht,
- Fig. 3: einen Querschnitt durch ein fertiges Metallprofil mit seitlich am Profilschenkel hochgedrücktem benachbart liegendem Material,
- Fig. 4: einen Querschnitt durch ein fertiges Metallprofil mit weiter entfernt vom eingestellten Profilschenkel liegenden Spuren der Andrückwerkzeuge,
- Fig. 5: einen Querschnitt durch ein fertiges Metallprofil mit sehr dicht am eingestellten Profilschenkel liegenden Spuren der Andrückwerkzeuge,
- Fig. 6: ein längs aufgeschnittenes Metallprofil mit wellenförmig angeordnetem Profilschenkel in y-Achse.

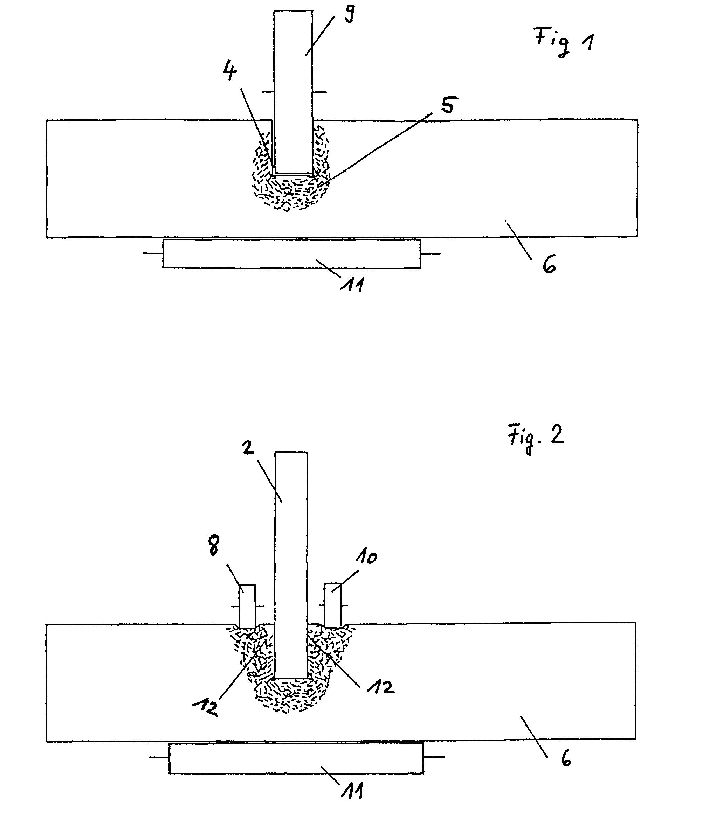

Figur 1 zeigt einen Querschnitt durch einen gefügeverändernden Walzvorgang zum Einbringen einer Rille in einen Profilschenkel durch Walzen. Der Profilschenkel 6 kann ein beliebiges Halbzeug sein, das in keiner Weise vorkalibriert sein muß und auch nicht besondere Anforderungen an Maßhaltigkeit und/oder Toleranzen erfüllen muß, um für das erfindugsgemäße Herstellungsverfahren geeignet zu sein. Anstelle eines Flachmaterials können auch gebogene Bleche, vorgeformte Profile oder sonstige Halbzeuge eingesetzt werden. Einzige Vorbedingung an den Werkstoff ist ein ausreichendes Restformänderungsvermögen für die nachfolgenden Bearbeitungen. Die metallischen Halbzeuge, die als ein Profilschenkel für das nachfolgend beschriebene Befestigungsverfahren eingesetzt werden, weisen eine kristalline Gefügestruktur mit einem Verband von Körnern auf.

In den anderen Profilschenkel 6 ist sodann mittels eines oder'mehrerer geeigneter Werkzeuge wie die gezeigte Druckrolle 9 in die Struktur des Materials umformend eine Rille 4 in kaltem Zustand durch Einsenken oder Walzen in die Oberfläche eingebracht worden. Der von der Druckrolle 9 eingebrachte Druck wird dabei von der Gegenhalterrolle 11 abgestützt, sodaß der Profilschenkel 6 nicht vor dem Druck der Druckrolle 9 ausweichen kann. Bei der Materialumformung zum Einbringen der Rille handelt es sich um eine in der Figur nicht näher gezeigte mehr oder weniger geringfügige Geometrieänderung des Profilschenkels 6 ohne Materialverlust oder Massenänderung oberhalb der Fließgrenze des Werkstoffes. Anders als bei fräsenden, schneidenden oder sonstigen abrasiven Verfahren soll hier der vorhandene Werkstoff so weit wie möglich verfügbar bleiben. Das Gefüge verändert sich im Bereich der Umformzone, was durch die Strichelung 5 angedeutet ist, und abhängig vom Umformgrad verfestigt sich der Werkstoff in der Umformzone. Je nach Ausgestaltung einzelner und der gewählten Abfolge verschiedener Werkzeuge können ganz gezielte Materialflüsse erzeugt werden. So können durch eine günstig gewählte Abfolge der Werkzeuge die Umformkräfte niedrig gehalten werden, Überbeanspruchungen des Werkstoffs vermieden, Zonen unterschiedlicher Verfestigung geschaffen oder gewünschte Formungen wie beispielsweise Hinterschnitte, Ausbeulungen, etc. erzielt werden. Die Werkzeuge, die umformend die Rille ausbilden, können spitz, abgerundet, eckig, gestuft, asymmetrisch, mit einem beliebigen Polygonzug, teilbreitenausfüllend oder mit einer auf sonstige Weise den Materialfluß unterstützenden Geometrie versehen sein. Die Werkzeuge können als Hub- oder Rollwerkzeuge arbeiten, und sie können in jeder Hoch-, Längs- und Querachse beweglich sein, unterschiedliche Durchmesser aufweisen, exzentrisch gelagert sein, in gleichen oder unterschiedlichen Winkeln angestellt oder auf sonstige Weise angeordnet sein, um gewünschte Anforderungen an die Ausformung der Rille 4 zu ermöglichen. Für einen gezielten Materialfluß können auch Niederhalter eingesetzt werden, um bestimmte Verformungen zu erhalten oder zu fördern. Auch können Niederhalter oder zusätzliche Formwerkzeuge eingesetzt werden, um die Einhaltung vorbestimmter Maße oder Toleranzen sicherzustellen. Je nach Bedarf kann die Maßhaltigkeit auch nur für bestimmte Abschnitte eines Metallprofils durch entsprechende Werkzeuge sichergetsellt werden, was den Aufwand verringert. Für das erfindungsgemäße Verfahren ist wesentlich, daß Teile des Werkstoffes umgeformt werden; dabei darf es zumindest teilweise auch zu einer Unterbrechung des Materialverbundes kommen, ohne daß dadurch der Kern des erfindungsgemäßen Verfahrens berührt wäre.

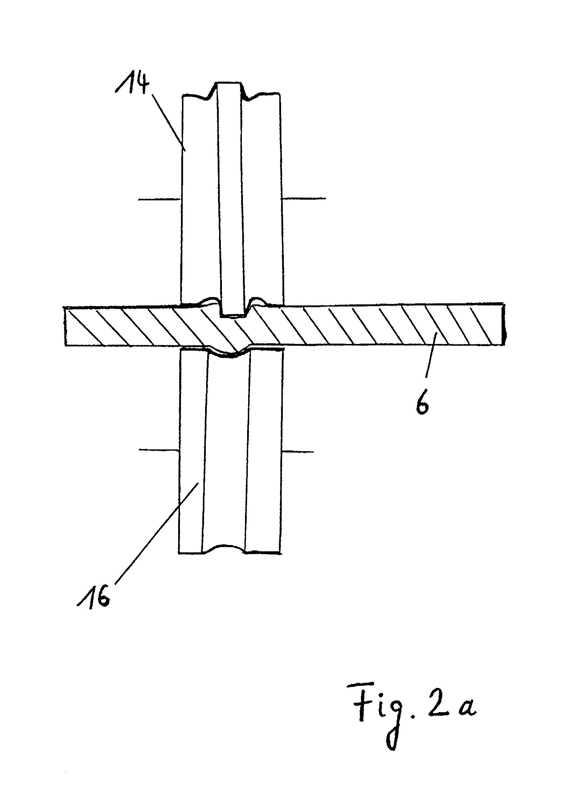

Der eine Profilschenkel 2 ist in Figur 2 schon in die fertige Rille 4 des anderen Profilschenkels 6 eingestellt. Die Rille 4 wurde wie beschrieben gefügeverändernd in den anderen Profilschenkel 6 eingebracht. Dabei ist das von der Gefügeveränderung betroffene Material verfestigt worden. Die Struktur des seitlichen Wandungsmaterials der Rille 4 ist beispielsweise in Richtung der Basis der Rille 4 gerichtet, und die Strukturlinien, die bei einem Querschnitt durch ein fertiges Profil sichtbar sind, laufen dann unterhalb der Basis der Rille 4 bogenförmig aufeinander zu. Ein ähnlicher Verlauf kann sich in den Bereichen, in denen die Druckrollen 8 und 10 auf das Material des Werkstoffs einwirken, zeigen, das genau Strukturbild ist jedoch von der Ausgestaltung und Abfolge der einzelnen Bearbeitungs- und/oder Druckwerkzeuge abhängig. Grundsätzlich wird das Material des Profilschenkels 6 bei den Bearbeitungen durch die Rillen- und Druckwerkzeuge seitlich der eintauchenden Werkzeuge gestreckt und unterhalb der Werkzeuge gestaucht. Bei Einbringung der Rille 4 in das Material des Werkstoffs des Profilschenkels 6 und das anschließende Andrücken des benachbart zur Rille 4 liegenden Materials 12 des Profilschenkels 6 mittels der Druckrollen 8 und 10 kommt es durch eine Kaltverformung zu einer Kaltverfestigung des Materials. Die Druckrollen 8 und 10 erzeugen einen so hohen Druck auf das benachbart zur Rille befindliche Material 12 des Profilschenkels 6, daß im direkten Druckbereich der Druckrollen 8, 10 die Fließgrenze des Werkstoffs überschritten wird und das Material durch den Druck so in eine Fließbewegung versetzt wird. Das fließende Material leitet den Druck an die Zonen weiter, die den geringsten Gegendruck aufbauen, und das sind benachbart zur Rille diejenigen Bereiche, die aufgrund eines gewissen Spiels mit den seitlichen Wandungen der Rille 4 in Richtung der Seitenflächen des in die Rille 4 eingestellten Profilschenkels 2 ausweichen können. Bemerkenswert ist an dieser Stelle, daß das Material durchaus in eine andere Richtung ausweichen kann als in die Richtung, in die der durch die Druckrollen 8 und 10 aufgebrachte Druck gerichtet ist. In dem in Figur 2 gezeigten Beispiel wird der Druck parallel zum Profilschenkel 2 in den Profilschenkel 6 eingebracht, das fließende Material weicht jedoch seitlich in die Richtung der Rille 4 aus. Die Fließbewegung kann durch eine geeignete Formung der Druckrollen 8 und 10 jedoch auch zusätzlich unterstützt werden. Durch das aufgrund des Druckes auftretende Fließverhalten schließt sich die vorher zwischen den Seitenwänden des eingestellten Profilschenkels 2 und den Seitenwänden der Rille 4 befindliche Lücke. Das fließende Material ist auch dazu in der Lage, nicht-fließendes Material zu verdrängen, so daß nicht nur das fließende Material selbst, sondern auch nicht-fließendes Material, das sich zwischen den Seitenwänden der Rille 4 und den Druckflächen der Druckrollen 8 und 10 befindet, auf die Seitenwände des eingestellten Profilschenkels 2 zubewegen kann. Bei Einbringung eines entsprechend hohen Drucks legt sich also das verdrängte benachbart liegende Material 12 an die seitlichen Oberflächen des Profilschenkels 2. Damit wird eine kraftschlüssige Verbindung zwischen dem Material der beiden Profilschenkel 2 und 6 geschaffen.

Wenn die benachbart zueinander liegenden Flächen der Rille 4 und die Oberflächen des eingestellten Profilschenkels 2 nicht glattflächig, sondern auf beliebige Weise aufgerauht, aufgestaucht, gekörnt, hinterschnitten oder auch sonstige Weise so geformt sind, daß sie durch ihre Form zueinander auftretenden Druck- Zug und Biegekräften besser widerstehen können, so ergibt sich neben dem Kraftschluß ein zusätzlicher Formschluß, wobei die Negativformung einer Seitenwand der Rille 4 zur Positivform des eingestellten Profilschenkels 2 zumindest teilweise erst mittels der von eingebrachten Druck erzeugten Fließbewegung des Materials erzielt wird.

Je nach statischer Anforderung an das fertige Metallprofil und der dementsprechenden Einstellung der Druckrollen 8 und 10 können diese mehr oder weniger tief in das benachbart zur Rille liegende Material 12 eindringen, jedoch ohne eine allzu große Schneidwirkung, was sich auf die Festigkeit der gefügeverändernden Befestigung eher ungünstig auswirken würde.

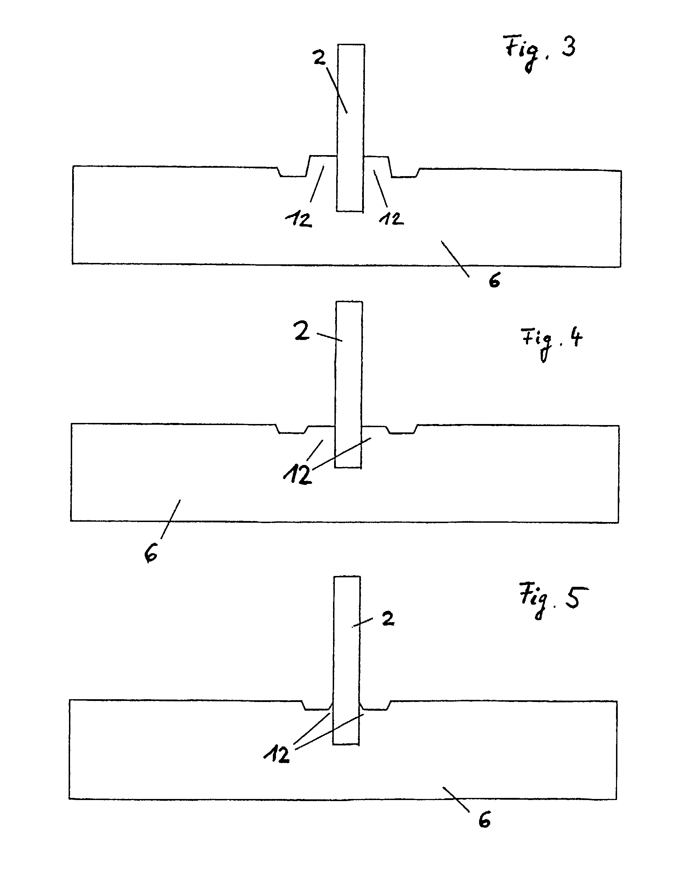

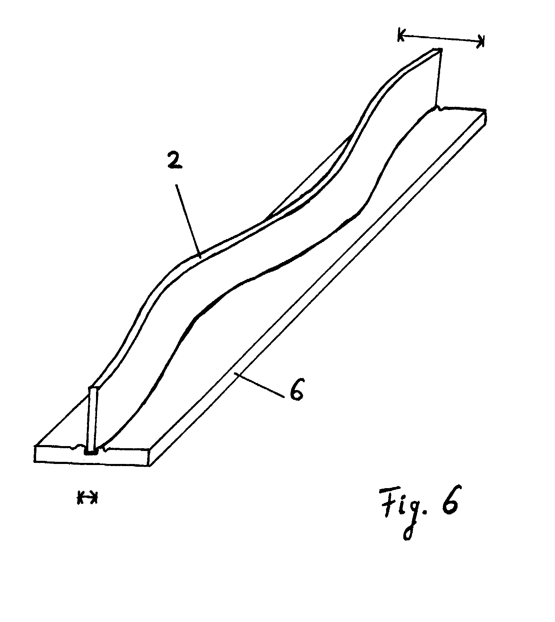

Auch die Geometrie der Kante einer Druckrolle und damit der von ihr eingebrachte Druck sind unter diesem Aspekt zu sehen. Aber auch schon mit einer flachen Umfangskontur der Druckrolle läßt sich eine zufriedenstellende gefügeverändernde Befestigungswirkung erzielen. Auch der Abstand der Druckrollen 8 und 10 zu den seitlichen Oberflächen des Profilschenkels 2 kann entsprechend den Anforderungen an das fertige Metallprofil gewählt werden. Je nach Einstellung der Druckrollen 8 und 10 ist es möglich, das benachbart zur Rille befindliche Material 12 an den seitlichen Oberflächen des Profilschenkels 2 hochzudrücken. Das Material wird seitlich an den Flächen des Profilschenkels 2 hochgeschoben, um die Kontaktfläche zwischen den Profilschenkeln zu vergrößern. Ein Beispiel für ein entsprechend hergestelltes Profil ist in Figur 3 im Querschnitt gezeigt. Durch ein solches Hochschieben wird eine größere Kontaktfläche zwischen den Profilschenkeln 2 und 6 und damit zusammenhängend eine höhere Haltekraft erreicht. Eine höhere Böschung kann auch durch Einfügen von zusätzlichem drittem Material, beispielsweise in Keil- oder Drahtform, erreicht werden. Auch kann der seitliche Abstand der auf den Profilschenkel 6 einwirkenden Druckwerkzeuge 8, 10 zu den Seitenflächen des in die Rille 4 eingestellten Profilschenkels 2 varriert werden. Dabei ist jedoch darauf zu achten, daß die Flußbewegung des Materials unter den Druckwerkzeugen noch ausreicht, um zumindest eine kraftschlüssige Verbindung zwischen dem benachbart liegendem Material 12 und den Seitenwänden des eingestellten Profilschenkels 2 zu schaffen. Beispiele für fertige Metallprofile, die mit unterschiedlichen Abständen der Druckwerkzeuge 8, 10 zum Profilschenkel 2 hergestellt wurden, sind in den Figuren 4 und 5 gezeigt. Ohne daß hierzu weitere Figuren zur Darstellung beigefügt sind, ist es für den Fachmann nachvollziehbar, daß auch die Tiefe der Rille 4 sowie die Einsenktiefe der Druckwerkzeuge 8, 10 variiert werden kann, ohne dadurch das Prinzip des Herstellens einer zumindest kraftschlüssigen Verbindung durch gefügeveränderndes Befestigen zu verlassen. Je nach Einstellung der Druckrollen 8 und 10 kann also eine zug- und druckfeste Verbindung zwischen den Profilschenkeln 2 und 6 geschaffen werden, die das fertige Metallprofil in seinen statischen Eigenschaften mit den herkömmlichen Profilen annähernd vergleichbar sein lassen.

Um im Automobilbau ein bestimmtes Crashverhalten oder um ein bestimmtes Schwingungsverhalten eines erfindungsgemäßen Metallprofils zu erhalten, ist es beispielsweise möglich, die Eintauchtiefe der Druckrollen oder den seitlichen Abstand während des Durchlaufs eines Profils zu verändern. Eine weitere Beeinflussungsmöglichkeit der Statik eines fertigen Metallprofils ergibt sich aus nachfolgenden Bearbeitungswerkzeugen, die die Rinnen und Böschungswinkel gezielt glätten können. Die fertige gefügeverändernde Befestigung ist gegen eine spätere Öffnung an den Kontaktstellen dadurch gesichert, indem das gefügeveränderte Material in der Tiefe flächig mit dem darunterliegenden Restmaterial des Profilschenkels 6 verbunden bleibt. Auftretende Zug-, Kopfzug-, Druck- und Biegekräfte können so breitflächig in das darunterliegende weniger verdichtete Profilschenkelmaterial abgeleitet werden, und Microbewegungen des verdichteten, gefügeveränderten Materials an den Verbindungsstellen werden so verhindert. Überhaupt liegt hier der große Vorteil der gefügeverändernden Befestigung im Verhältnis zu den bekannten vorkalibrierten, über die Oberfläche eines Profilschenkels 6 hinausstehenden Biegeschenkel, in die ein Profilschenkel eingestellt wird: die über die Oberfläche hinausragenden verbiegbaren Schenkel sind grundsätzlich viel anfälliger für ungewollte nachträgliche Aufbiegungen, weil sie höheren Hebelkräften ausgesetzt sind. Die seitlichen Anlageflächen der Rille 4 sind bei dem vorgeschlagenen Verfahren hingegen in das Material des Profilschenkels 6 eingebettet und dadurch gegen Hebelkräfte viel besser abgestützt.

Anstatt durch ein rollendes Verfahren mit Druckrollen kann das erfindungsgemäße Verfahren auch durch punktuell einwirkende Druckwerkzeuge realisiert oder ergänzt werden. Nicht dargestellt sind wahlweise vorsehbare zusätzliche Druckrollen, durch die die Seitenwände einer Rille reibungswiderstandserhöhend bearbeitet werden können, beispielsweise durch Ritzen, Kerben, Rendeln, Lochen, etc., um die Festigkeit der Verbindung zwischen den Profilschenkeln 2 und 6 zu erhöhen. Das beschriebene Verfahren kann ohne größeren Aufwand auch zum Zusammenfügen von mehreren Profilschenkeln in verschiedenen Achsen angewandt werden. Dabei können die jeweils erforderlichen Druckwerkzeuge übereinander, hintereinander und/oder nebeneinander angeordnet sein oder man kann zusätzliche Profilschenkel durch einen wiederholten Durchlauf des teilgefertigten Metallprofils durch eine Druckrollenstraße oder durch die Hubwerkzeuge an diesem gefügeverändernd befestigen.

In Figur 2 a wird schematisch im Querschnitt ebenfalls gezeigt, wie eine Rille in einen anderen Profilschenkel 6 gewalzt wird. Die Besonderheit besteht hier darin, daß die Druckrolle 14 auf ihrer Umfangsfläche geeignet geformt ist, um die gewünschte Rillenkontur in den unter der Druckrolle durchlaufenden anderen Profilschenkel 6 gefügeverändernd einzubringen, zusätzlich zur Rille 4 jedoch eine weitere Formung auf den Profilschenkel 6 ausübt. Unter dem Profilschenkel 6 ist die Druckrolle 16 dargestellt, deren Umfangsfläche eine Negativform zur Gestaltung der Umfangsfläche der Druckrolle 14 darstellt. Die Druckrolle 16 stützt einerseits den Profilschenkel gegen den von der Druckrolle 14 aufgebrachten Preßdruck ab und unterstützt andererseits den erwünschten Formungsprozeß durch die Negativform der Umfangsfläche.

Neben Druckrollen mit einer rein stützenden Funktion können auch Schneid- oder Druckwerkzeuge in den Fertigungsprozeß integriert sein, die durch Einbringung von Rillen, Schnitten oder Löchern dem Zweck dienen, eine zu weitgehende Verformung der in Bearbeitung befindlichen Profilschenkel zu vermeiden. Aus der Bearbeitung von Blechen ist es dem Fachmann bekannt, auf welche Weise er entsprechende Bearbeitungen vornehmen muß, um bestimmte erwünschte Materialbewegungen zu erzielen.

Anstelle der formenden Druckrollen 14 und 16 können - wie in Fig. 1 gezeigt - natürlich auch bis auf die zur Ausbildung der Rillenkontur notwendige Ausformung glatte Druckrollen auf ein durchlaufendes Blech einwirken, oder mittels schneidender Druckrollen in einem voroder nachgelagerten Bearbeitungsprozeß Metallprofilschenkelteile von einem Blechcoil abtrennen, wenn die Druckrollen 14 und wahlweise 16 entsprechend geformt und angeordnet sind, und es können mehrere Druckrollen hintereinander angeordnet sein oder es laufen einzelne Profilschenkel mehrfach durch eine Bearbeitungsstraße hindurch. Durch zusätzliche Formung der Umfangsfläche der Druckrollen 14 und 16 oder evtl. zusätzliche Druckrollen können die durchlaufenden Profilschenkel zusätzlich reibungswiderstandserhöhend bearbeitet, eingekerbt oder hinterschnitten werden. In die durch die Bearbeitung geschaffenen Freiräume kann das beim gefügeverändernden Andrücken bewegte Material in die Freiräume eindringen und so eine zusätzliche formschlüssige Verzahnung bringen. Die Rolle 16 kann als Gegenhalterrolle jedoch auch glatt ausgebildet sein wie die in Figuren 1 und 2 dargestellten Gegenhalterrollen 11, wenn keine Formung des anderen Profilschenkels 6 gewünscht ist.

Vorzugsweise sollen die Druckrollen der Bearbeitungswerkzeuge leicht austauschbar sein, um ohne einen hohen Montageaufwand schnell jede gewünschte Profilform herstellen zu können. Die Druckwerkzeuge können ein- oder beidseitig der Rille arbeiten. Bei nur einseitigem Andrücken durch ein Druckwerkzeug ist es vorteilhaft, wenn auf der anderen Seite mit Niederhaltern oder Gegenhaltern gearbeitet wird, um ein zufriedenstellendes Ergebnis zu erzielen. Ein nur einseitiges Andrücken bietet sich beispielsweise an, wenn ein Profilschenkel dicht an der Abschlußkante der Oberfläche des anderen Profilschenkels eingestellt werden soll, um beispielsweise ein L-Profil herzustellen, und nicht mehr genügend Material auf der anderen Seite seitlich der Rille vorhanden ist, um durch Überschreiten der Fließgrenze des Werkstoffs eine kraftschlüssige Anlage des Materials an die Oberfläche des eingestellten einen Profilschenkels erreichen zu können.

Figur 6 zeigt, wie der eine Profilschenkel 2 wellenförmig auf dem anderen Profilschenkel 6 befestigt ist. Über die eigentliche Materialstärke des Profilschenkels 2 hinausgehend wird so über die Länge des fertigen Metallprofils eine den Wellenamplituden entsprechende Aufstützbreite des anderen Profilschenkels 6 auf dem einen Profilschenkel 2 erreicht, wodurch sich die Torsionssteifigkeit des fertigen Metallprofils erhöht. Die Torsionssteifigkeit kann aber auch durch mehrere Profilschenkel in Richtung einer Biegeachse, aufweitende bzw. sonstige umformende Bearbeitungen eines Profilschenkels erhöht werden. Eine solche nichtlinear ausgebildete Rille kann durch Anlenkung der Bearbeitungswerkzeuge oder durch eine spezielle Ausformung der Bearbeitungswerkzeuge erzielt werden.

Für einen Fachmann weist die Aufgabe, eine Maschinenstraße zu realisieren, die nach dem erfindungsgemäßen Verfahren arbeitet, keine große Schwierigkeit auf. In eine strukturumformend arbeitende Befestigungsmaschine wird passend geschnittenes Metallblech eingefahren. Während des Vorschubs besorgen einzelne Druckrollen das Ausbilden der Rille. In die fertige Rille wird ein Profilschenkel eingestellt, und beide Profilschenkel werden durch passend angeordnete Druckrollen mittels des gefügeverändernden Befestigungsverfahrens längs der Rille miteinander befestigt. Nachfolgende Druckrollen können die Befestigungsrillen und evtl. Grate und Böschungswinkel glätten. Anstelle der Druckrollen können auch stanzende, mit einem Hub arbeitende Werkzeuge in der Maschine angeordnet sein. Die Position der Druckrollen sollte veränderbar sowie die Druckrollen selbst austauschbar sein, um die hohe Flexibilität des neuartigen Verfahrens voll ausnutzen zu können. Mit einer entsprechenden Maschine sind hohe Fördergeschwindigkeiten und Durchsatzmengen erreichbar, mit denen aus simplem Flachmaterial anspruchsvolles Profilmaterial herstellbar ist. Die Maschine kann mit Automatisierungstechniken ausgestattet sein, um in einem Fertigungsverbund taktgenau die richtigen Metallprofile zufördern zu können. Steuerungs- und regeltechnisch sind entsprechende Einrichtungen aus dem Stand der Technik bekannt. Diese Fertigungsmaschine kann baukastenmäßig modular aufgebaut sein, um je nach Anforderungen, Finanzkraft und Investitionsbereitschaft des Abnehmers die passende Maschine konfigurieren zu können.

## Patentansprüche

1. Verfahren zur Herstellung eines Metallprofils,
**dadurch gekennzeichnet,**
daß zunächst in einen anderen Profilschenkel (6) eine Rille (4) mittels einer gefügeverändernden Materialumformung eingebracht wird, sodann ein Profilschenkel (2) des Metallprofils mit seiner Stoßseite in die auf der Innenseite des anderen Profilschenkels befindliche Rille eingestellt wird und dann durch einen Druck, bei dem die Fließgrenze des darunter befindlichen Materials überschritten wird, unmittelbar oder mittelbar das benachbart zur Rille befindlichen Material des anderen Profilschenkels (6) dazu veranlaßt wird, sich so weit auf die Seitenflächen des einen Profilschenkels (2) zuzubewegen, daß zumindest eine kraftschlüssige Verbindung an den Kontaktstellen erreicht wird.

2. Verfahren nach Anspruch 1,
**dadurch gekennzeichnet,**
daß das Einbringen der Rille (4) und/oder das anschließende Andrücken des benachbart zur Rille liegenden Materials (12) des anderen Profilschenkels (6) mittels geeignet geformter Druckrollen (9,8,10), an denen die ineinanderstehenden Profilschenkel entlanglaufen und/oder über die die Druckrollen hinweglaufen, an die Seitenflächen des einen Profilschenkels angedrückt wird.

3. Verfahren nach Anspruch 1 oder 2,
**dadurch gekennzeichnet,**
daß das Einbringen der Rille (4) und/oder das Andrücken des benachbart zur Rille liegenden Materials (12) des anderen Profilschenkels (6) durch Hubbewegungen geeigneter Werkzeuge bewirkt wird.

4. Verfahren nach einem oder mehreren der Ansprüche 1 bis 3,
**dadurch gekennzeichnet,**
daß die Profilschenkel (2,6) aus beliebigem Flachmaterial oder Halbzeugen bestehen.

5. Verfahren nach einem oder mehreren der Ansprüche 1 bis 4,
**dadurch gekennzeichnet,**
daß die Kanaltiefe und/oder -breite der Rille (4) an einer Stelle eines Querschnitts durch einen Profilschenkel unterschiedlich ist im Vergleich zu einer Rille an einer anderen Stelle.

6. Verfahren nach einem oder mehreren der Ansprüche 1 bis 5,
**dadurch gekennzeichnet,**
daß die im anderen Profilschenkel (6) befindliche Rille (4) und das in die Rille eintauchende Material des einen Profilschenkels (2) zur Hochachse des einen Profilschenkels angewinkelt sind oder die Hochmittelachse der Rille nicht rechtwinklig zur Horizontalfläche des anderen Profilschenkels ist.

7. Verfahren nach einem oder mehreren der Ansprüche 1 bis 6,
**dadurch gekennzeichnet,**
daß zusätzlich zum Einbringen der Rille (4) zumindest eine der Seitenwände der Rille von geeignet geformten und angeordneten Werkzeugen in an sich bekannter Weise reibungswiderstanderhöhend bearbeiten ist.

8. Verfahren nach einem oder mehreren der Ansprüche 1 bis 7,
**dadurch gekennzeichnet,**
daß der einzustellende Profilschenkel zumindest einseitig und/oder zumindest teilweise reibungswiderstandserhöhend bearbeitet ist.

9. Verfahren nach einem oder mehreren der Ansprüche 1 bis 8,
**dadurch gekennzeichnet,**
daß zumindest ein Profilschenkel während des gefügeverändernden Befestigungsvorganges durch feststehende und/oder bewegliche Gegenhalter (11) abgestützt ist.

10. Verfahren nach einem oder mehreren der Ansprüche 1 bis 9,
**dadurch gekennzeichnet,**
daß auf der anderen Seite eines durch Druckrollen bearbeiteten Profilschenkels negativ geformte abstützende Rollen (16) oder Platten als Gegenhalter den zu formenden Metallblechstreifen abstützen.

11. Verfahren nach einem oder mehreren der Ansprüche 1 bis 10,
**dadurch gekennzeichnet,**
daß Druckrollen das benachbart zur Rille (4) befindliche Material des anderen Profilschenkels (6) an den Seitenflächen des einen Profilschenkels (2) hochdrücken.

12. Verfahren nach einem oder mehreren der Ansprüche 1 bis 11,
**dadurch gekennzeichnet,**
daß ein oder mehrere Metallstreifen, die zu einem Profilschenkel eines Metallprofils weiterverabeitet wird, vorher mittels Druck- oder Schneidwerkzeugen von einem Blechcoil abgetrennt werden.

13. Verfahren nach einem oder mehreren der Ansprüche 1 bis 12,
**dadurch gekennzeichnet,**
daß Druck- oder Schneidwerkzeuge mittels einer geeigneten Gestaltung der Umfangsfläche zusätzlich Einkerbungen und/oder reibungswiderstandserhöhende Bearbeitungen und/oder Erhebungen in die Oberflächen eines abzutrennenden oder abgetrennten Profilschenkels schaffen.

14. Verfahren nach einem oder mehreren der Ansprüche 1 bis 13,
**dadurch gekennzeichnet,**
daß anstelle oder zusätzlich zu Rollen-Werkzeugen geeignete stanzende, mit einer Hubbewegung arbeitende Werkzeuge eingesetzt sind.

15. Verfahren nach einem oder mehreren der Ansprüche 1 bis 14,
**dadurch gekennzeichnet,**
daß zusätzlich zur Befestigung durch die gefügeverändernde Befestigung an sich bekannte Befestigungsverfahren wie beispielsweise Kleben, Nieten, Schweißen eingesetzt sind.

16. Verfahren nach einem oder mehreren der Ansprüche 1 bis 15,
**dadurch gekennzeichnet,**
daß anstelle oder zusätzlich zum benachbart liegenden Material des anderen Profilschenkels weiteres drittes Material mittels gefügeverändernder Befestigung in die Rille und an zumindest eine Seitenfläche des einen Profilschenkels ein- oder angebracht ist.

17. Verfahren nach einem oder mehreren der Ansprüche 1 bis 16,
**dadurch gekennzeichnet,**
daß das strukturumformend behandelte Material dadurch im Vergleich zum übrigen Material verfestigt ist.

18. Verfahren nach einem oder mehreren der Ansprüche 1 bis 17,
**dadurch gekennzeichnet,**
daß das Material zumindest eines gefügeverändernd befestigten Profilschenkels nachträglich zusätzlich verfestigt oder gehärtet wird.

19. Verfahren nach einem oder mehreren der Ansprüche 1 bis 18,
**dadurch gekennzeichnet,**
daß die gefügeverändernd miteinander befestigten Profilschenkel vor oder nach dem Befestigungsvorgang ganz oder teilweise beschichtet werden.

20. Verfahren nach einem oder mehreren der Ansprüche 1 bis 19,
**dadurch gekennzeichnet,**
daß weitere Profilschenkel oder Teile aus Metall oder anderen Werkstoffen wie beispielsweise Glas, Gummi, Kunststoff, Keramik etc. auf zumindest einem der Profilschenkel gefügeverändernd befestigt sind und/oder zwei oder mehrere Profilschenkel miteinander verbinden.

21. Verfahren nach einem oder mehreren der Ansprüche 1 bis 20,
**dadurch gekennzeichnet,**
daß die gefügeverändernd miteinander befestigten Profilschenkel vorher oder nachher zusätzlich gekantet oder in sonstiger Weise umgeformt sind.

22. Verfahren nach einem oder mehreren der Anspüche 1 bis 21,
**dadurch gekennzeichnet,**
daß der eine Profilschenkel zumindest abschnittweise nicht nur in gerader, sondern seitlich versetzter Linie, in Wellenform, diagonal, quer, unterbrochen, auf dem anderen Profilschenkel gefügeverändernd befestigt ist.

23. Verfahren nach einem oder mehreren der Ansprüche 1 bis 22,
**dadurch gekennzeichnet,**
daß der in die Rille eingestellte eine Profilschenkel eine andere Temperatur hat als der andere Profilschenkel, bevor beide Profilschenkel miteinander gefügeverändernd befestigt werden.

24. Verfahren nach einem oder mehreren der Ansprüche 1 bis 23,
**dadurch gekennzeichnet,**
daß die im Bereich der Rille miteinander zu verbindenden Materialien zusätzlich oder ersatzweise zur gefügeverändernden Befestigung anhand eines hochfrequent arbeitenden Schlagstoßverfahrens miteinander verbunden sind.

25. Verfahren nach einem oder mehreren der Ansprüche 1 bis 24,
**dadurch gekennzeichnet,**
daß das Material der aneinander zu befestigenden Körper an den gefügeverändernd behandelten oder schlagstoßverbundenen Stellen miteinander verwirkt bzw. durchsetzt ist.

## Claims

1. A process for producing a metal profile, characterised in that firstly a groove (4) is produced in another profile limb (6) by means of a structure-modifying material-transformation operation, then a profile limb (2) of the metal profile is set with its butt side into the groove which is disposed on the inside of the other profile limb and then by a pressure at which the flow limit of the material disposed therebeneath is exceeded, directly or indirectly the material of the other profile limb (6), adjacent to the groove, is caused to move towards the side surfaces of the one profile limb (2) to such an extent that at least a force-locking connection is achieved at the contact locations.

2. A process according to claim 1 characterised in that the operation of producing the groove (4) and/or the subsequent operation of applying pressure to the material (12) of the other profile limb (6). adjacent to the groove, is effected by means of suitably shaped pressure rollers (9, 8, 10) along which the interengaged profile limbs run and/or over which the pressure rollers pass, pressed against the side surfaces of the one profile limb.

3. A process according to claim 1 or claim 2 characterised in that the operation of producing the groove (4) and/or the operation of pressing against the material (12) of the other profile limb (6), adjacent to the groove, is effected by stroke movements of suitable tools.

4. A process according to one or more of claims 1 to 3 characterised in that the profile limbs (2, 6) comprise any flat material or semifinished products.

5. A process according to one or more of claims 1 to 4 characterised in that the channel depth and/or width of the groove (4) at a location of a cross-section through a profile limb is different in comparison with a groove at another location.

6. A process according to one or more of claims 1 to 5, characterised in that the groove (4) in the other profile limb (6) and the material of the one profile limb (2), which material engages into the groove, are angled relative to the perpendicular axis of the one profile limb or the perpendicular centre line of the groove is not at a right angle to the horizontal surface of the other profile limb.

7. A process according to one or more of claims 1 to 6 characterised in that in addition to production of the groove (4), at least one of the side walls of the groove is machined in per se known manner in such a way as to increase frictional resistance by suitably shaped and arranged tools.

8. A process according to one or more of claims 1 to 7 characterised in that the profile limb to be fitted is machined at least at one side and/or at least in part in such a way as to increase frictional resistance.

9. A process according to one or more of claims 1 to 8 characterised in that at least one profile limb is supported by stationary and/or movable supports (11) during the structure-modifying fixing operation.

10. A process according to one or more of claims 1 to 9 characterised in that on the other side of a profile limb which is processed by pressure rollers negatively shaped supporting rollers (16) or plates as supports support the metal plate strip to be shaped.

11. A process according to one or more of claims 1 to 10 characterised in that pressure rollers press the material of the other profile limb (6), adjacent to the groove (4) up against the side surfaces of the one profile limb (2).

12. A process according to one or more of claims 1 to 11 characterised in that one or more metal strips which are further processed to form a profile limb of a metal profile are previously separated from a sheet metal coil by means of pressing or cutting tools.

13. A process according to one or more of claims 1 to 12 characterised in that pressing or cutting tools by means of a suitable configuration of the peripheral surface additionally produce notches and/or frictional resistance-enhancing machinings and/or raised portions in the surfaces of a profile limb which is cut off or which is to be cut off.

14. A process according to one or more of claims 1 to 13 characterised in that, instead of or in addition to roller tools, suitable stamping tools which operate with a stroke movement are used.

15. A process according to one or more of claims 1 to 14 characterised in that, in addition to fixing by the structure-modifying fixing, per se known fixing processes such as for example gluing, riveting or welding are used.

16. A process according to one or more of claims 1 to 15 characterised in that, instead of or in addition to the adjacently disposed material of the other profile limb, further third material is introduced or applied by means of structure-modifying fixing into the groove and to at least a side surface of the one profile limb.

17. A process according to one or more of claims 1 to 16 characterised in that the material which has been treated in such a way as to transform its structure is thereby consolidated in comparison with the rest of the material.

18. A process according to one or more of claims 1 to 17 characterised in that the material of at least one profile limb which has been fixed with structure modification is subsequently additionally consolidated or hardened.

19. A process according to one or more of claims 1 to 18 characterised in that the profile limbs which are fixed together with structure modification are entirely or partially coated prior to or after the fixing operation.

20. A process according to one or more of claims 1 to 19 characterised in that further profile limbs or parts of metal or other materials such as for example glass, rubber, plastics material, ceramic etc. are fixed with structure modification on at least one of the profile limbs and/or two or more profile limbs are joined together.

21. A process according to one or more of claims 1 to 20 characterised in that the profile limbs which are fixed together with structure modification are previously or subsequently additionally edged or transformed in some other way.

22. A process according to one or more of claims 1 to 21 characterised in that the one profile limb is fixed with structure modification to the other profile limb at least in a portion-wise manner not only in a straight but a laterally displaced line. in a wavy shape, diagonally, transversely, interruptedly.

23. A process according to one or more of claims 1 to 22 characterised in that the one profile limb which is fitted into the groove is at a different temperature from the other profile limb before the two profile limbs are fixed together with structure modification.

24. A process according to one or more of claims 1 to 23 characterised in that the materials which are to be joined together in the region of the groove in addition to or as a substitute for the structure-modifying fixing are joined together by means of a hammer joining process operating at high frequency.

25. A process according to one or more of claims 1 to 24 characterised in that the materials of the bodies which are to be fixed to each other are knitted or interspersed with each other at the locations which are treated with structure modification or connected by a hammer joining process.

## Revendications

1. Procédé pour fabriquer un profilé métallique,
caractérisé en ce
qu'on aménage tout d'abord dans une autre branche profilée (6) une rainure (4) au moyen d'une déformation de matière modifiant la structure, puis on introduit une branche (2) du profilé métallique avec sa face d'aboutement dans la rainure formée dans la face intérieure de l'autre branche du profilé et ensuite en appliquant une pression, lors de laquelle la limite de fluage du matériau sous-jacent est dépassée, on amène directement ou indirectement le matériau, qui est situé au voisinage de la rainure, de l'autre branche (6) du profilé à se déplacer en direction des surfaces latérales d'une branche (2) du profilé au point d'obtenir au moins une liaison de force au niveau des zones de contact.

2. Procédé selon la revendication 1, caractérisé en ce
que l'aménagement de la rainure (4) et/ou le refoulement suivant du matériau (12), qui est voisin de la rainure, de l'autre branche (6) du profilé est effectué à l'aide de galets de pression conformés de façon appropriée (9,8,10), sur lesquels circulent les branches emboîtées l'une dans l'autre du profilé et/ou les galets de pression circulent au-dessus des branches du profilé, alors que les surfaces latérales d'une branche du profilé sont repoussées contre ces galets.

3. Procédé selon la revendication 1 ou 2, caractérisé en ce
que l'aménagement de la rainure (4) et/ou le refoulement du matériau (12), situé au voisinage de la rainure, de l'autre branche (6) du profilé est réalisé au moyen de déplacements de levage d'outils appropriés.

4. Procédé selon une ou plusieurs des revendications 1 à 3, caractérisé en ce
que les branches (9,6) du profilé sont réalisées en un matériau plat quelconque ou en des produits semi-finis quelconques.

5. Procédé selon une ou plusieurs des revendications 1 à 4, caractérisé en ce
que la profondeur et/ou la largeur du canal de la rainure (4) au niveau d'un emplacement d'une coupe transversale d'une branche du profilé est différente de celle d'une rainure en un autre emplacement.

6. Procédé selon une ou plusieurs des revendications 1 à 5, caractérisé en ce
que la rainure (4) située dans l'autre branche (6) du profilé et le matériau, qui est refoulé dans la rainure, d'une branche (2) du profilé sont inclinés par rapport à l'axe vertical d'une branche du profilé, ou l'axe médian vertical de la rainure n'est pas perpendiculaire à la surface horizontale de l'autre branche du profilé.

7. Procédé selon une ou plusieurs des revendications 1 à 6, caractérisé en ce
qu'en plus de l'aménagement de la rainure (4) , au moins l'une des parois latérales de la rainure est usinée de façon connue en soi, d'une manière augmentant sa résistance de frottement, au moyen d'outils conformés et disposés de façon appropriée.

8. Procédé selon une ou plusieurs des revendications 1 à 7, caractérisé en ce
que la branche du profilé devant être introduite est usinée au moins sur une face et/ou au moins de manière à accroître partiellement la résistance de frottement.

9. Procédé selon une ou plusieurs des revendications 1 à 8, caractérisé en ce
qu'au moins une branche du profilé est supportée, pendant le processus de fixation modifiant la structure, par les supports antagonistes fixes et/ou mobiles (11).

10. Procédé selon une ou plusieurs des revendications 1 à 9, caractérisé en ce
que des rouleaux (16) ou des plaques de support conformées en creux, sur l'autre face d'une branche du profilé traité au moyen de galets de pression, en tant que support antagoniste, supportent la bande de tôle métallique devant être conformée.

11. Procédé selon une ou plusieurs des revendications 1 à 10, caractérisé en ce
que des galets de pression refoulent vers le haut le matériau, situé au voisinage de la rainure (4) de l'autre branche (6) du profilé à proximité des surfaces latérales d'une branche (2) du profilé.

12. Procédé selon une ou plusieurs des revendications 1 à 11, caractérisé en ce
qu'on sépare préalablement d'une bobine de tôle, à l'aide d'outils de compression ou de découpage, une ou plusieurs bandes métalliques, que l'on traite ensuite pour former une branche d'un profilé métallique.

13. Procédé selon une ou plusieurs des revendications 1 à 12, caractérisé en ce
que des outils de compression ou de découpage créent en outre, à l'aide d'une configuration appropriée de la surface circonférentielle, des encoches et/ou des zones usinées et/ou des bossages augmentant la résistance de frottement, sur les surfaces d'une branche du profilé, qui doit être séparée ou est séparée.

14. Procédé selon une ou plusieurs des revendications 1 à 13, caractérisé en ce
qu'à la place ou en supplément d'outils à galets, on utilise des outils de découpage appropriés travaillant en exécutant un déplacement de levage.

15. Procédé selon une ou plusieurs des revendications 1 à 14, caractérisé en ce
qu'en plus de l'opération de fixation qui modifie la structure, on utilise des procédés de fixation connus en soi, comme par exemple un collage, un rivetage, un soudage.

16. Procédé selon une ou plusieurs des revendications 1 à 15, caractérisé en ce
qu'à la place ou en plus du matériau voisin de l'autre branche du profilé on introduit ou on applique un autre troisième matériau au moyen d'une fixation modifiant la structure, dans la rainure et sur au moins une surface latérale d'une branche du profilé.

17. Procédé selon une ou plusieurs des revendications 1 à 16, caractérisé en ce
que le matériau traité avec déformation de la structure est de ce fait consolidé par rapport au reste du matériau.

18. Procédé selon une ou plusieurs des revendications 1 à 17, caractérisé en ce
que le matériau d'au moins une branche du profilé fixée avec modification de la structure est en outre renforcé ou durci ultérieurement.

19. Procédé selon une ou plusieurs des revendications 1 à 18, caractérisé en ce
qu'on recouvre en totalité ou en partie, par un revêtement les branches du profilé, qui sont fixées entre elles avec modification de la structure, avant ou après le processus de fixation.

20. Procédé selon une ou plusieurs des revendications 1 à 19, caractérisé en ce
que d'autres branches du profilé ou des parties en métal ou en d'autres matériaux comme par exemple du verre, du caoutchouc, une matière plastique, une céramique, etc. sont fixées avec modification de la structure, sur au moins l'une des branches du profilé et/ou deux ou plusieurs branches du profilé sont reliées entre elles.

21. Procédé selon une ou plusieurs des revendications 1 à 20, caractérisé en ce
que les branches du profilé, qui sont fixées entre elles avec modification de la structure, sont en outre repliées à arête vive au préalable ou ultérieurement ou sont déformées d'une autre manière.

22. Procédé selon une ou plusieurs des revendications 1 à 21, caractérisé en ce
qu'une branche du profilé fixée avec modification de la structure sur l'autre branche du profilé, en étant interrompue au moins par sections non seulement suivant une ligne droite, mais également suivant une ligne décalée latéralement, selon une forme ondulée, en diagonale, transversalement.

23. Procédé selon une ou plusieurs des revendications 1 à 22, caractérisé en ce
qu'une branche du profilé insérée dans la rainure possède une température différente de celle de l'autre branche du profilé avant que les deux branches du profilé soient fixées l'une à l'autre avec modification de la structure.

24. Procédé selon une ou plusieurs des revendications 1 à 23, caractérisé en ce
que les matériaux devant être reliés entre eux dans la zone de la rainure sont reliés entre eux en supplément ou à titre de remplacement de la fixation réalisant une modification de la structure, sur la base d'un procédé d'application de chocs travaillant avec une fréquence élevée.

25. Procédé selon une ou plusieurs des revendications 1 à 24, caractérisé en ce
que les matériaux des corps devant être fixés l'un à l'autre sont entrelacés ou entremêlés aux emplacements sont traités avec modification de la structure ou qui sont réunis par application de chocs.
